# EUROPÄISCHE PATENTSCHRIFT

(11) **EP 2 745 082 B1**
(45) Veröffentlichungstag und Bekanntmachung des Hinweises auf die Patenterteilung: **09.09.2015**
(21) Anmeldenummer: 12743932.1
(22) Anmeldetag: 17.07.2012
(51) Int. Cl.: G01D 11/24

(54) **SYSTEM ZUR BESTIMMUNG UND/ODER ÜBERWACHUNG MINDESTENS EINER PROZESSGRÖßE**
SYSTEM FOR DETERMINING AND/OR MONITORING AT LEAST ONE PROCESS VARIABLE
SYSTÈME DE DÉTERMINATION ET/OU DE SURVEILLANCE D'AU MOINS UN PARAMÈTRE DE PROCÉDÉ

(30) Priorität: 16.08.2011 DE 102011081012
(43) Veröffentlichungstag der Anmeldung: 25.06.2014
(73) Patentinhaber: Endress+Hauser GmbH+Co. KG, 79689 Maulburg (DE)
(72) Erfinder: HENKEL, Ira, 79664 Wehr (DE); MÜLLER, Alexander, 79361 Sasbach-Jechtingen (DE)
(74) Vertreter: Andres, Angelika Maria
(86) Internationale Anmeldenummer: PCT/EP2012/064024
(87) Internationale Veröffentlichungsnummer: WO 2013/023861

(56) Entgegenhaltungen:
- EP-A1- 2 099 273
- WO-A1-02/103327
- WO-A1-2004/034037
- DE-A1-102007 058 608

## Beschreibung

Die vorliegende Erfindung betrifft ein System zur Bestimmung und/oder Überwachung mindestens einer Prozessgröße eines Mediums in einem Behälter oder einer Rohrleitung. Das System beinhaltet mindestens eine für die Prozessgröße sensitive Sensoreinheit. Bei der Prozessgröße handelt es sich beispielsweise um den Füllstand, die Dichte, die Viskosität, oder die Leitfähigkeit eines Mediums.

Aus der Prozessmesstechnik ist eine Vielzahl an Messgeräten mit unterschiedlichen Sensoreinheiten zur Bestimmung oder Überwachung einer oder mehrerer Prozessgrößen bekannt. Derartige Vorrichtungen besitzen meist ein Sensorgehäuse mit einem Prozessanschluss, welcher in die Wandung eines Behälters oder einer Rohrleitung eingebracht wird. In dem Sensorgehäuse befinden sich die Messelektronik und je nach Ausgestaltung zumindest teilweise die Sensoreinheit. Mit dem Sensorgehäuse verbunden ist ein weiteres Gehäuse, welches außerhalb des Prozesses verbleibt, die Elektronikeinheit beherbergt und als Schutzgehäuse dient. Häufig ist die Elektronikeinheit in Form eines Moduls mit eigenem Gehäuse in das Schutzgehäuse eingebracht. Weitere Elemente des Schutzgehäuses sind beispielsweise ein Display zur Anzeige von Messwerten oder Benutzerinformationen und eine Schnittstellen zu einem Bussystem, über welches beispielsweise Daten zwischen dem Messgerät und einer Leitwarte austauschbar sind oder auch das Messgerät mit Energie versorgbar ist.

Es sind Ausgestaltungen bekannt, bei welchen die Elektronikeinheit von der Sensoreinheit beabstandet angeordnet ist, beispielsweise durch Montage an einer benachbarten oder weiter entfernten Gebäudewand. Für elektronische Bauteile ist in explosionsgefährdeten Bereichen ein Schutzgehäuse erforderlich, um den Sicherheitsstandards zu genügen. Hierdurch sind zwei Schutzgehäuse erforderlich, eines für die Kabelzuführung der Sensoreinheit und eines für die Elektronikeinheit. Dies macht eine derartige Ausgestaltung eines Messgerätes kostenintensiv. Weiterhin ist die Montage des die Elektronikeinheit beinhaltenden Schutzgehäuses relativ aufwendig.

Die Aufgabe der Erfindung besteht darin, eine Vorrichtung zur Bestimmung und/oder Überwachung mindestens einer Prozessgröße mit einer von der Sensoreinheit beabstandet angeordneten Elektronikeinheit bereit zu stellen, welche gegenüber der aus dem Stand der Technik bekannten Lösung kostengünstiger ist.

Die Aufgabe wird gelöst durch ein System zur Bestimmung und/oder Überwachung mindestens einer Prozessgröße eines Mediums in einem Behälter oder einer Rohrleitung, mit einer Sensoreinheit, welche ein Sensorelement zur Erfassung der Prozessgröße aufweist, mit einem eine Elektronikeinheit aufweisenden Elektronikmodul in Form eines Einsatzes für ein Feldgehäuse, und mit einem Adapter, welcher derart ausgestaltet ist, dass das Elektronikmodul abgesetzt von der Sensoreinheit und ohne Feldgehäuse auf einer Tragschiene anordenbar ist.

Erfindungsgemäß wird das Elektronikmodul in einer von der Messstelle entfernten Leitwarte installiert und mit der Sensoreinheit beispielsweise über eine entsprechend lange elektrische Leitung verbunden. Das Elektronikmodul benötigt kein Schutzgehäuse, da es auf einer Tragschiene, beispielsweise einer Hutschiene, in einem Schaltschrank der Leitwarte angeordnet ist. Dort herrscht auf jeden Fall keine Explosionsgefahr, sodass keine Sicherheitsbestimmungen in Form von vorgeschriebenen Gehäusen für elektrische Bauteile bestehen. Durch das eingesparte Feldgehäuse für das Elektronikmodul ist das System kostengünstig. Zudem spart die Anordnung auf der Tragschiene Platz. Ein weiterer Vorteil besteht in der problemlosen Montage und Austauschbarkeit des Elektronikmoduls.

In einer ersten Ausgestaltung der erfindungsgemäßen Lösung ist der Adapter derart ausgestaltet, dass der Adapter auf die Tragschiene aufschiebbar oder an der Tragschiene festklemmbar ist.

In einer Ausgestaltung ist das Elektronikmodul mit dem Adapter verschraubbar. Hierdurch ist eine stabile und dennoch bei Bedarf einfach zu lösende Verbindung zwischen Elektronikmodul und Adapter herstellbar.

Gemäß einer Ausgestaltung verfügt der Adapter über eine Leiterplatte mit mindestens einem Anschlusskontakt, wobei das Elektronikmodul derart mit der Leiterplatte verbindbar ist, dass mindestens ein Ausgangssignal der Elektronikeinheit an dem mindestens einen Anschlusskontakt abgreifbar ist.

In einer weiteren Ausgestaltung sind die Sensoreinheit und das Elektronikmodul über mindestens eine Elektrische Leitung miteinander verbunden. Die Elektrische Leitung dient der Übertragung von Energie an die Sensoreinheit und der vorzugsweise bidirektionalen Datenübertragung zwischen Sensoreinheit und Elektronikeinheit.

Eine Ausgestaltung sieht vor, dass die Elektronikeinheit derart ausgestaltet ist, dass sie die Sensoreinheit mit einem Steuersignal versorgt, von der Sensoreinheit ein die Prozessgröße repräsentierendes Empfangssignal empfängt und das Empfangssignal in Bezug auf die Prozessgröße auswertet.

Gemäß einer weiteren Ausgestaltung erzeugt die Elektronikeinheit mindestens ein Schaltsignal, welches der Steuerung eines nachgeordneten Feldgerätes dient. Beispielsweise dient das Schaltsignal der Steuerung einer nachgeordneten Pumpe oder eines Ventils.

In einer weiteren Ausgestaltung handelt es sich bei dem Sensorelement um eine mechanisch schwingfähige Einheit oder um eine kapazitive und/oder konduktive Sonde. Die mechanisch schwingfähige Einheit ist insbesondere eine Schwinggabel oder ein Schwingstab, wobei letzterer vor allem in Schüttgütern zum Einsatz kommt. Vibronische Messgeräte, bei welchen eine Schwinggabel das Sensorelement bildet, sind aus dem Stand der Technik bekannt und werden von der Anmelderin in großer Vielfalt unter dem Namen Liquiphant für Flüssigkeiten und Soliphant für Schüttgüter angeboten und vertrieben. Prinzipiell ist die Erfindung jedoch auf beliebige Sensoreinheiten anwendbar, welche mit einer Elektronikeinheit zu verbinden sind.

In einer Ausgestaltung handelt es sich bei der Prozessgröße um mindestens eine der Größen Füllstand, Dichte, Viskosität und elektrische Leitfähigkeit. Es kann sich jedoch auch andere Prozessgrößen von Gasen, Flüssigkeiten oder Feststoffen handeln.

Die Erfindung wird anhand der nachfolgenden Figuren näher erläutert.
Fig. 1 skizziert eine Remote-Ausführung eines Messgerätes;
Fig. 2 zeigt ein mittels Adapter auf einer Tragschiene befestigtes Elektronikmodul.

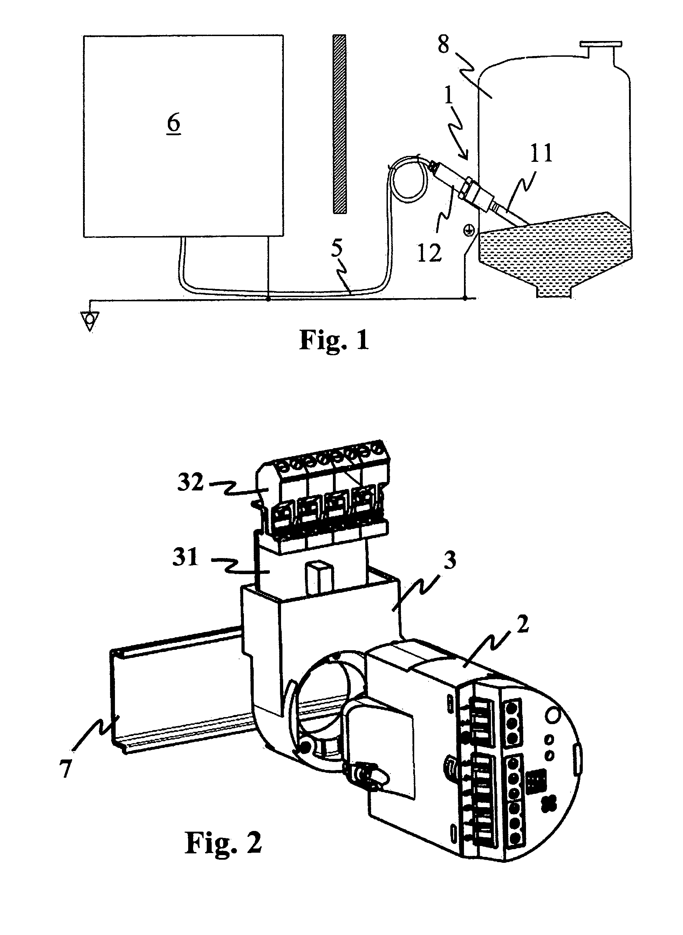

Fig. 1 zeigt eine Messstelle und einen davon beabstandeten Kontrollraum, welcher hier schematisch durch einen Schaltschrank 6 hinter einer Trennwand 9 dargestellt ist. An der Messstelle ist die Sensoreinheit 1 derart angeordnet, dass das für die zu bestimmende Prozessgröße sensitive Sensorelement 11, hier schematisch als Zinken einer Schwinggabel dargestellt, in den Behälter 8 hineinragt. Das Sensorgehäuse 12 der Sensoreinheit 1 verfügt hierzu über einen Prozessanschluss. In dem Sensorgehäuse 12 ist weiterhin eine Sensorelektronikeinheit angeordnet. An einer außerhalb des Behälters 8 befindlichen Stelle weist das Sensorgehäuse 12 eine Durchführung für die elektrische Leitung 5 auf. Mittels der elektrischen Leitung 5 ist die Sensoreinheit 1 mit Energie versorgbar und sind Daten an die und von der Sensoreinheit 1 übertragbar. Die Energie- und Datenübertragung an die Sensoreinheit 1 wird von dem Elektronikmodul 2 gesteuert. Dieses ist über die elektrische Leitung 5 mit der Sensoreinheit 1 verbunden, jedoch von der Sensoreinheit 1 abgesetzt angeordnet, sodass man von einer Remote-Ausführung sprechen kann.

Je nach Anordnung der Sensoreinheit 1 ist eine derartige separate Anordnung des Elektronikmoduls 2 zur besseren Zugänglichkeit vorteilhaft. Aus dem Stand der Technik ist die Anbringung der elektronischen Komponenten unter einer Bedachung bekannt, falls die Sensoreinheit 1 rauem Wetter oder hohen Temperaturschwankungen ausgesetzt ist. Die Einbringung des Elektronikmoduls 2 in ein separates Schutzgehäuse ist hierbei vorteilhaft oder gar erforderlich. Letzteres gilt insbesondere für explosionsgeschützte Bereiche. Die erfindungsgemäße Anordnung des Elektronikmoduls 2 im Kontrollraum stellt eine Platz und Kosten sparende Alternative zur Anordnung der Elektronik in einem an einer Wand montierten Feldgehäuse dar.

Das Elektronikmodul 2 befindet sich in dem Kontrollraum auf einer Tragschiene 7. Üblicherweise ist in einem Kontrollraum mindestens ein Schaltschrank 6 aufgestellt, welcher mehrere Tragschienen 7 zum Anbringen von elektronischen Geräten, wie beispielsweise Steuereinheiten oder Schaltelementen aufweist. Eine derartige Anordnung ist besonders Platz sparend. Da eine Tragschiene 7 in der Regel vorhanden ist, nutzt die erfindungsgemäße Anbringung des Elektronikmoduls 2 vorhandene Infrastruktur aus. Es wird kein zusätzlicher Platz für eine Wandmontage eines Feldgehäuses mit Elektronikeinsatz benötigt.

Die Anordnung des Elektronikmoduls 2 im Schaltschrank 6 ist insbesondere beim Einsatz des Messgerätes in explosionsgefährdeten Bereichen vorteilhaft, da nur die Sensoreinheit 1 in dem gefährdeten Bereich angeordnet ist, nicht aber die Elektronikeinheit. Da das Elektronikmodul 2 innerhalb des Kontrollraums und somit auf jeden Fall außerhalb eines explosionsgefährdeten Bereichs angeordnet ist, ist ein Schutzgehäuse für das Elektronikmodul 2 nicht erforderlich.

Das Elektronikmodul 2 besteht im Wesentlichen aus einer Elektronikeinheit, worunter auf einer oder mehreren Leiterplatten angeordnete elektronische Komponenten wie Mikrocontroller, A/D- und D/A-Wandler, Widerstände, Kondensatoren, etc., zu verstehen sind, und einem Elektronikgehäuse. Das Elektronikgehäuse fasst die einzelnen Komponenten der Elektronikeinheit zusammen und schützt diese vor Staub oder Feuchte. Hierbei kann die Elektronikeinheit in dem Elektronikgehäuse vergossen sein. Das Elektronikgehäuse weist eine oder mehrere Schnittstellen auf, über welche ein elektrisches Signal abgreifbar und weiterleitbar ist. Die Sensoreinheit 1 wird über das Elektronikmodul 2 mit Energie versorgt.

In Fig. 2 ist die Befestigung des Elektronikmoduls 2 an der Tragschiene 7 illustriert. Hierzu ist ein an die Art der Tragschiene 7 angepasster Adapter 3 vorgesehen. Bei der Tragschiene 7 handelt es sich beispielsweise um eine so genannte Hutschiene, welche auch als DIN-Schiene TS-35 bekannt ist. Der Adapter 3 kann aber auch an eine andere Tragschiene 7, wie z.B. eine G-Schiene, angepasst sein. Die Montage des Elektronikmoduls 2 an der Tragschiene 7 ist in einfacher Weise möglich. Beispielsweise ist das Elektronikmodul 2 mittels Schrauben an dem Adapter 3 befestigbar und der Adapter 3 auf die Schiene aufschiebbar oder einklemmbar. Auch die Demontage und ein Austausch des Elektronikmoduls 2 sind entsprechend schnell und ohne großen Aufwand durchführbar. In einer alternativen Ausgestaltung sind das Elektronikmodul 2 und der Adapter einteilig ausgestaltet, d.h. der Adapter ist Teil des Gehäuses des Elektronikmoduls 2.

Der Adapter 3 weist eine Leiterplatte 31 auf, welche beispielsweise einsteckbar ausgestaltet ist. Auf der Leiterplatte 31 befinden sich Leiterbahnen, welche einerseits in Anschlusskontakte 32 münden und andererseits von dem Elektronikmodul 2 kontaktierbar sind. Über die Anschlusskontakte 32 erfolgen die Verbindung des Elektronikmoduls 2 mit einer Energiequelle und die Ausgabe eines oder mehrerer Ausgangssignale des Elektronikmoduls 2.

Die Elektronikeinheit des Elektronikmoduls 2 ist vorteilhaft derart ausgestaltet, dass keine zusätzliche Steuereinheit für nachgestellte Feldgeräte erforderlich ist. Hierzu weist die Elektronikeinheit neben Mitteln zur Auswertung des von der Sensoreinheit 1 übermittelten Empfangssignals Mittel zur Erzeugung mindestens eines Schaltsignals auf, welches an nachgestellte Feldgeräte weiterleitbar und von diesen verarbeitbar ist. Ein weiteres Signal kann an einen Rechner übertragen werden, welcher über ein Bussystem mit dem Elektronikmodul 2 verbunden ist und über welchen beispielsweise die Eingabe von Parametern für die Messung ermöglicht ist. Weitere Funktionen des Elektronikmoduls 2 sind beispielsweise die Erzeugung eines zur Energie- und Datenübertragung an die Sensoreinheit 1 geeigneten Signals. Die Kommunikation zwischen Sensoreinheit 1 und Elektronikmodul 2 erfolgt vorzugsweise über eine UART-Schnittstelle.

Im Fall eines Grenzstandschalters zur Überwachung eines bestimmten Füllstands wird über die Anschlusskontakte 32 das Schaltsignal ausgeben, welches das Erreichen des zu überwachenden Füllstands signalisiert. Dieses wird beispielsweise als Steuersignal an eine Pumpe weitergeleitet.

In einer alternativen Ausgestaltung ist die Elektronikeinheit des Elektronikmoduls 2 derart ausgestaltet, dass sie das Empfangssignal von der Sensoreinheit 1 zwar auswertet, für die Erzeugung des passenden Schaltsignals für nachgeordnete Feldgeräte, sowie für die Kommunikation mit einem Rechner jedoch eine separate Steuereinheit verantwortlich ist. Das Elektronikmodul 2 übergibt in diesem Fall ein Ausgangssignal, vorzugsweise ein 4-20mA-Signal, an die Steuereinheit. Vorzugsweise erfolgt die Kommunikation zwischen Sensoreinheit 1 und Elektronikmodul 2 über ein Verfahren, welches eine relativ große Länge der elektrischen Leitung 5, welche die Sensoreinheit 1 mit dem Elektronikmodul 2 verbindet, erlaubt, sodass die Erfindung nicht nur bei in unmittelbarer Nähe zu einem Schaltschrank 6 befindlichen Sensoreinheiten 1 anwendbar ist.

### Bezugszeichenliste

- 1: Sensoreinheit
- 11: Sensorelement
- 12: Sensorgehäuse
- 2: Elektronikmodul
- 3: Adapter
- 31: Leiterplatte
- 32: Anschlusskontakt
- 5: Elektrische Leitung
- 6: Schaltschrank
- 7: Tragschiene
- 8: Behälter

## Patentansprüche

1. System zur Bestimmung und/oder Überwachung mindestens einer Prozessgröße eines Mediums in einem Behälter oder einer Rohrleitung, mit einer Sensoreinheit (1), welche ein Sensorelement (11) zur Erfassung der Prozessgröße aufweist, mit einem eine Elektronikeinheit aufweisenden Elektronikmodul (2) in Form eines Einsatzes für ein Feldgehäuse (4), und mit einem Adapter (3), welcher derart ausgestaltet ist, dass das Elektronikmodul (2) abgesetzt von der Sensoreinheit (1) und ohne Feldgehäuse (4) auf einer Tragschiene (7) anordenbar ist.

2. System nach Anspruch 1,
**dadurch gekennzeichnet,**
**dass** der Adapter (3) derart ausgestaltet ist, dass der Adapter (3) auf die Tragschiene (7) aufschiebbar oder an der Tragschiene (7) festklemmbar ist.

3. System nach Anspruch 1 oder 2,
**dadurch gekennzeichnet,**
**dass** das Elektronikmodul (2) mit dem Adapter (3) verschraubbar ist.

4. System nach einem der vorangehenden Ansprüche,
**dadurch gekennzeichnet,**
**dass** der Adapter (3) über eine Leiterplatte (31) mit mindestens einem Anschlusskontakt (32) verfügt, und dass das Elektronikmodul (2) derart mit der Leiterplatte (31) verbindbar ist, dass mindestens ein Ausgangssignal der Elektronikeinheit an dem mindestens einen Anschlusskontakt (32) abgreifbar ist.

5. System nach einem der vorangehenden Ansprüche,
**dadurch gekennzeichnet,**
**dass** die Sensoreinheit (1) und das Elektronikmodul (2) über mindestens eine Elektrische Leitung (5) miteinander verbunden sind.

6. System nach einem der vorangehenden Ansprüche,
**dadurch gekennzeichnet,**
**dass** die Elektronikeinheit derart ausgestaltet ist, dass sie die Sensoreinheit (1) mit einem Steuersignal versorgt, von der Sensoreinheit (1) ein die Prozessgröße repräsentierendes Empfangssignal empfängt und das Empfangssignal in Bezug auf die Prozessgröße auswertet.

7. System nach einem der vorangehenden Ansprüche,
**dadurch gekennzeichnet,**
**dass** die Elektronikeinheit mindestens ein Schaltsignal erzeugt, welches der Steuerung eines nachgeordneten Feldgerätes dient.

8. System nach einem der vorangehenden Ansprüche,
**dadurch gekennzeichnet,**
**dass** es sich bei dem Sensorelement (11) um eine mechanisch schwingfähige Einheit oder um eine kapazitive und/oder konduktive Sonde handelt.

9. System nach einem der vorangehenden Ansprüche,
**dadurch gekennzeichnet,**
**dass** es sich bei der Prozessgröße um mindestens eine der Größen Füllstand, Dichte, Viskosität und elektrische Leitfähigkeit handelt.

## Claims

1. System for determining and/or monitoring at least one process variable of a medium in a container or a pipe, with a sensor unit (1), which has a sensor element (11) for recording the process variable, with an electronic module (2) in the form of an insert for a field housing (4), said electronic module having an electronic unit, and with an adapter which is designed in such a way that the electronic module (2) is at a distance from the sensor unit (1) and can be arranged on a carrier rail (7) without a field housing (4).

2. System as claimed in Claim 1,
**characterized in that**
the adapter (3) is designed in such a way that it is possible to slide the adapter (3) onto the carrier rail (7) or to fix it permanently to the carrier rail (7).

3. System as claimed in Claim 1 or 2,
**characterized in that**
the electronic module (2) can be screwed to the adapter (3).

4. System as claimed in one of the previous claims,
**characterized in that**
the adapter (3) has a printed board (31) with at least one connecting contact (32), and that the electronic module (2) can be connected to the printed board (31) in such a way that at least one output signal of the electronic unit can be tapped at the at least one connecting contact (32).

5. System as claimed in one of the previous claims,
**characterized in that**
the sensor unit (4) and the electronic module (2) are interconnected via at least one electrical cable (5).

6. System as claimed in one of the previous claims,
**characterized in that**
the electronic unit is designed in such a way that it supplies the sensor unit (1) with a control signal, receives a reception signal from the sensor unit (1) that represents the process variable and evaluates the reception signal with regard to the process variable.

7. System as claimed in one of the previous claims,
**characterized in that**
the electronic unit generates at least one switching signal which is used to control a downstream field device.

8. System as claimed in one of the previous claims,
**characterized in that**
the sensor element (11) is a unit capable of mechanical oscillation or a capacitance and/or conductive probe.

9. System as claimed in one of the previous claims,
**characterized in that**
the process variable is at least one of the following variables: level, density, viscosity and electrical conductivity.

## Revendications

1. Système destiné à la détermination et/ou la surveillance d'une grandeur process d'un produit dans un réservoir ou dans une conduite, avec une unité de capteur (1), laquelle comporte un élément de capteur (11) destiné à la mesure de la grandeur process, avec un module électronique (2) comportant une unité électronique sous la forme d'un insert pour un appareil de terrain (4), et avec un adaptateur (3), lequel est conçu de telle sorte que le module électronique (2) puisse être disposé sur un profilé support (7) de façon détachée de l'unité de capteur (1) et sans appareil de terrain (4).

2. Système selon la revendication 1,
**caractérisé**
**en ce que** l'adaptateur (3) est conçu de telle manière que l'adaptateur (3) puisse être inséré sur le profilé support (7) ou serré sur le profilé support (7).

3. Système selon la revendication 1 ou 2,
**caractérisé**
**en ce que** le module électronique (2) peut être vissé avec l'adaptateur (3).

4. Système selon l'une des revendications précédentes,
**caractérisé**
**en ce que** l'adaptateur (3) dispose d'un module (31) avec au moins un bornier de raccordement (32), et en ce que le module électronique (2) peut être relié avec le module (31) de telle sorte qu'au moins un signal de sortie de l'unité électronique puisse être prélevé sur l'au moins un bornier de raccordement (32).

5. Système selon l'une des revendications précédentes,
**caractérisé**
**en ce que** unité de capteur (1) et le module électronique (2) sont reliés entre eux par l'intermédiaire d'au moins un câble électrique (5).

6. Système selon l'une des revendications précédentes,
**caractérisé**
**en ce que** l'unité électronique est conçue de telle sorte qu'elle alimente l'unité de capteur (1) avec un signal de commande, reçoit de l'unité de capteur (1) un signal de réception représentant la grandeur process et évalue le signal de réception en référence à la grandeur process.

7. Système selon l'une des revendications précédentes,
**caractérisé**
**en ce que** l'unité électronique génère au moins un signal de commutation, qui sert à la commande d'un appareil de terrain placé en aval.

8. Système selon l'une des revendications précédentes,
**caractérisé**
**en ce qu'**il s'agit, concernant l'élément de capteur (11), d'une unité apte à vibrer mécaniquement ou d'une sonde capacitive et/ou conductive.

9. Système selon l'une des revendications précédentes,
**caractérisé**
**en ce qu'**il s'agit, concernant la grandeur process, d'au moins l'une des grandeurs niveau, densité, viscosité et conductivité électrique.
